(19)

Europäisches
Patentamt
European
Patent Office
Office européen
des brevets

(11) **EP 4 140 741 A1**

(12) **EUROPEAN PATENT APPLICATION**
published in accordance with Art. 153(4) EPC

(43) Date of publication:
**01.03.2023  Bulletin 2023/09**

(21) Application number: **20931946.6**

(22) Date of filing: **21.12.2020**

(51) International Patent Classification (IPC):
**B33Y 10/00** (2015.01)   **B33Y 50/02** (2015.01)
**B22F 3/105** (2006.01)

(52) Cooperative Patent Classification (CPC):
**B22F 10/36; B22F 10/25; B22F 10/38;** Y02P 10/25

(86) International application number:
**PCT/CN2020/137883**

(87) International publication number:
**WO 2021/212888 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **22.04.2020  CN 202010319683**

(71) Applicants:
 • **AECC Shanghai Commercial Aircraft Engine
   Manufacturing Co., Ltd.
   Shanghai 201306 (CN)**
 • **Aecc Commercial Aircraft Engine Co., Ltd.
   Shanghai 200241 (CN)**

(72) Inventors:
 • **FU, Jun
   Shanghai 200241 (CN)**
 • **LEI, Liming
   Shanghai 200241 (CN)**
 • **LI, Yali
   Shanghai 200241 (CN)**
 • **ZHOU, Xinmin
   Shanghai 200241 (CN)**
 • **FU, Xin
   Shanghai 200241 (CN)**

(74) Representative: **Marchioro, Paolo
   Studio Bonini S.r.l.
   Corso Fogazzaro, 8
   36100 Vicenza (IT)**

(54) **METHOD FOR PREFABRICATING POOR FUSION DEFECTS BY CONTROLLING LMD
PROCESS**

(57)    A method for prefabricating a poor fusion defect by controlling a LMD process, comprising: obtaining a model (10), comprising a shaping zone (1) and a defect prefabricated zone (2) that has a preset defect (3); performing a layerwise slicing process on the model (10), wherein for each deposition layer (4) of the defect prefabricated zone (2), the preset defect (3) has a maximum dimension a0 in a perpendicular direction; for the shaping zone (1), performing a shaping process under predetermined shaping process parameters of the LMD process; and for the defect prefabricated zone (2), controlling shaping process parameters as follows: when a0<D, with respect to the shaping zone (1), changing a scan pitch between shaping paths and a powder feed rate in the deposition layer (4), thereby prefabricating the poor fusion defect; and when a0≥D, with respect to the shaping zone (1), reducing energy input of laser in the deposition layer (4), thereby prefabricating the poor fusion defect, wherein D is a spot diameter of the laser in the deposition layer (4) of the defect prefabricated zone (2). Through the above method, the poor fusion defect may be prefabricated at any position.

FIG.3

## Description

Technical Field

This disclosure relates to a method for prefabricating a poor fusion defect by controlling the laser melting deposition (LMD) process.

Background

Additive manufacturing (AM) technology has gradually matured and has been widely applied in the fields such as aerospace, medical treatment, automobile and nuclear power. LMD technology (e.g. by means of synchronous powder feeding) is a common AM technology. This technology transports and collects spherical powder by a powder carrier, and uses a high-energy laser beam to melt the synchronously transported and collected metal powder to form a moving unsteady metal molten pool. The small molten pool solidifies rapidly under high temperature gradient, melts and accumulates layer by layer, and finally forms the solid part. Generally, it is suitable for low-cost and short-cycle rapid shaping of large and complex metal structural pieces in the aerospace defense equipment, or rapid repair of high value-added components, such as aero-engine mounting system, rear platform, integral blisk, turbine blade and other components.

The LMD metal shaping/repair process involves multi-field coupling such as temperature field and stress field. It is a complex non-equilibrium solidification process. There are many unstable factors, and defects of different types and dimensions would inevitably be generated. Commonly, there are pores, cracks and poor fusion, etc.

As a typical defect, the poor fusion defect is formed because metal materials are not melted and bonded together. In the AM manufacturing or repair process, the poor lap-joint between passes or layers of the molten pool, or the joint of repair interface, both easily cause the poor fusion or incomplete fusion defect. The stress concentration at the defect position is relatively serious, and the damage is only second to cracks. The mechanical properties of the material would be significantly deteriorated, and the service life of the components would be seriously affected.

Due to the anisotropy of structure and properties, AM parts are different from traditional parts formed by casting, forging, welding, etc., and the resulting poor fusion defects are also different. Compared with traditional parts, there are problems such as different detection accuracy, poor accessibility and large detection blind zone. Therefore, the existing defect detection and evaluation methods are basically not applicable for AM parts. Therefore, the preparation of AM standard blocks, defect samples or defect parts with artificial defects can not only prepare for accurate non-destructive testing of defects, but also accurately conduct qualitative and quantitative research on defects generated in AM, accurately simulate the influence of different type or dimension of defects on the mechanical properties of AM shaping pieces, and further investigate and verify the influence of defects on the reliability of AM parts. This is of great significance for the application of AM parts in fields such as aerospace.

For the preparation of metal parts with poor fusion defects, there are currently two main methods. The first method is to create poor fusion defects with a certain dimension by controlling the welding process. The second method is to directly design the contour of poor fusion defects by utilizing selective laser melting (SLM), and directly shape parts with poor fusion defects inside. The poor fusion defect samples prepared by the first method has damaged the structure and properties of the samples to varying degrees, and cannot effectively simulate the poor fusion defect characteristics generated in the actual part manufacturing process. The poor fusion defects prepared by the second method generally does not have a continuous structure, and is only applicable for partial poor fusion defects. It cannot fully simulate the poor fusion defect characteristics generated in the actual part manufacturing process. At the same time, if the dimension is small, it is easily filled by the molten metal at the boundary contour, and the defect is unable to be shaped.

The above two methods both cannot accurately simulate the poor fusion defect characteristics in the part solidification process, cannot accurately represent the structural characteristics at the poor fusion defects, and cannot accurately and effectively evaluate the relationship between the defects and the influence on mechanical properties, and the relationship between the defects and the part reliability. At present, the preparation methods and approaches of typical artificial defects in the additive manufacturing metal parts for shaping/repair are still immature. This disclosure provides a controlling method for poor fusion defects in LMD aero-engine alloy components.

Summary

An object of this disclosure is to provide a method for prefabricating a poor fusion defect by controlling the LMD process.

Another object of this disclosure is to provide a method for prefabricating a poor fusion defect, by which the prefabricated poor fusion defects can simulate the defects generated in the actual solidification process, and can retain the continuous and complete characteristics of the structure at the defect.

This disclosure provides a method for prefabricating a poor fusion defect by controlling a LMD process, comprising: obtaining a model, comprising a shaping zone and a defect prefabricated zone that has a preset defect; performing a layerwise slicing process on the model, wherein for each deposition layer of the defect prefabricated zone, the preset defect has a maximum dimension $a_0$ in a perpendicular direction, which is perpendicular to a laser scan direction of the LMD process, wherein a0 takes a value within an interval range, the interval range is a variable range of a feature dimension of the poor fusion defect expected to be prefabricated, and the feature dimension is a maximum dimension of the poor fusion defect in the perpendicular direction; for the shaping zone, performing a shaping process under predetermined shaping process parameters of the LMD process; for the defect prefabricated zone, controlling shaping process parameters as follows: for each deposition layer, when a0<D, with respect to the shaping zone, changing a scan pitch between shaping paths and a powder feed rate in the deposition layer, thereby prefabricating the poor fusion defect; for each deposition layer, when a0≥D, with respect to the shaping zone, reducing energy input of laser in the deposition layer, thereby prefabricating the poor fusion defect; wherein D is a spot diameter of the laser in the deposition layer of the defect prefabricated zone.

In an embodiment, a0=(w1+w2)/2 is set; wherein w1 and w2 are lower limit and upper limit of the interval range, respectively.

In an embodiment, position, shape, quantity and dimension of the poor fusion defect expected to be prefabricated are preset, thereby determining position, shape, quantity and dimension of the defect prefabricated zone with the preset defect in the model, wherein the dimension of the poor fusion defect expected to be prefabricated comprises the feature dimension.

In an embodiment, when a0<D, the defect prefabricated zone comprises a *kth* shaping path and a (k+1)*th* shaping path that are adjacent to each other in the deposition layer, the preset defect is located between the *kth* shaping path and the (k+1)*th* shaping path, shaping paths on a first side of the preset defect in the perpendicular direction are the *kth* shaping path, a (k-1)*th* shaping path, a (k-2)*th* shaping path, until a first shaping path in sequent, and shaping paths on a second side of the preset defect in the perpendicular direction are the (k+1)*th* shaping path, a (k+2)*th* shaping path, until a last shaping path in sequent, wherein k is any natural number greater than 2; and for the defect prefabricated zone, the shaping process parameters are controlled as follows: h(k)=a0+D; h(k-1) and h(k+1) are preset to 20%-80% of D, and under a condition that a layer thickness of the deposition layer of the defect prefabricated zone is kept unchanged, f(k) and f(k+1) are respectively set according to h(k-1) and h(k+1); wherein h(k-1) is a scan pitch formed at a predetermined position in the deposition layer between the (k-1)*th* shaping path and the *kth* shaping path, h(k) is a scan pitch formed at the predetermined position in the deposition layer between the *kth* shaping path and the *(k+1)th* shaping path, h(k+1) is a scan pitch formed at the predetermined position in the deposition layer between the (k+1)*th* shaping path and the (k+2)*th* shaping path, the predetermined position corresponds to the maximum dimension of the preset defect in the deposition layer, f(k) is the powder feed rate corresponding to the *kth* shaping path, and f(k+1) is the powder feed rate corresponding to the (k+1)*th* shaping path.

In an embodiment, the *(k-1)th* shaping path and the (k+2)*th* shaping path are located in the deposition layer of the defect prefabricated zone; for the defect prefabricated zone, the shaping process parameters are further controlled as follows: h(k-2)=a*h(k-1); h(k+2)=b*h(k+1); f(k-1)=c*f(k); f(k+2)=d*f(k+1); wherein a, b, c, and d are constants greater than 1, h(k-2) is a scan pitch formed at a predetermined position in the deposition layer between the (k-2)*th* shaping path and the *(k-1)th* shaping path, h(k+2) is a scan pitch formed at the predetermined position in the deposition layer between the (k+2)*th* shaping path and a (k+3)*th* shaping path, f(k-1) is the powder feed rate corresponding to the *(k-1)th* shaping path, and f(k+2) is the powder feed rate corresponding to the (k+2)*th* shaping path.

In an embodiment, the shaping process parameters are controlled as follows: for the defect prefabricated zone, t0=100-200μm, P0=600-1000W, D=0.8-1mm; wherein t0 is the layer thickness, and P0 is a laser power.

In an embodiment, when a0≥D, P2≤0.1*P1 is set; wherein P2 is a laser power corresponding to the defect prefabricated zone, and P1 is a predetermined laser power among the predetermined shaping process parameters corresponding to the shaping zone.

In an embodiment, the LMD process adopts a synchronous powder feeding manner.

The above method can prefabricate poor fusion defects in LMD shaping pieces by controlling the LMD process. By controlling the shaping process parameters, the poor fusion defects of corresponding dimension can be prepared at a specified position, and the poor fusion defects can be obtained, which greatly reduces the difficulty in current prefabrication of poor fusion defects. The above method can not only fabricate poor fusion defects produced in the actual solidification process, but also retain the continuous and complete characteristics of the structure at the poor fusion defect.

The above method also performs defect prefabrication by using different control proposals according to different defect dimensions. When defect dimension is small, the defect is prefabricated by controlling the path planning and the powder feed rate, and when defect dimension is large, the defect is prefabricated by reducing the laser power.

Utilizing the above method to prefabricate poor fusion defects helps accurately analyze the real correspondence between LMD poor fusion defects and non-destructive testing signals, and can be combined with the assessment results of part performance for actual analysis and research on the relationship between poor fusion defects and part performance, and further analysis on the relationship between poor fusion defects and the reliability of AM parts.

Brief Description of the Drawings

The above and other features, properties and advantages of this disclosure will become more apparent from the following description in conjunction with the accompanying drawings and embodiments, wherein:

Fig. 1 is a flow diagram illustrating exemplary steps of the method according to this disclosure.
Fig. 2 is a model diagram according to the first example.
Fig. 3 is a schematic diagram of the deposition layer according to the first example.
Fig. 4 is a topographic view of a polished state according to the first example.
Fig. 5 is a model diagram according to the second example.
Fig. 6 is a schematic diagram of the deposition layer according to the second example.
Fig. 7 is a topographic view of a polished state according to the second example.
Fig. 8 is a model diagram according to the third example.
Fig. 9 is a schematic diagram of the deposition layer according to the third example.
Fig. 10 is a topographic view of a polished state according to the third example.

Detailed Description of Embodiments

This disclosure will be further described below in conjunction with the specific embodiments and the accompanying drawings. More details are set forth in the following description to facilitate a full understanding of this disclosure, but it is obvious that this disclosure can be implemented in many other ways that are different from those described herein. Those skilled in the art can make similar extensions and deductions according to the actual application situation without violating the connotation of this disclosure. Therefore, the content of this specific embodiment should not limit the protection scope of this disclosure.

For example, the first feature formed on or above the second feature, described later in the specification, may include an embodiment in which the first feature and the second feature are formed in a direct connection, and may also include an embodiment in which additional features are formed between the first feature and the second feature so that there may be no direct connection between the first feature and the second feature. Further, when the first element is described as being connected or combined with the second element, the description includes an embodiment where the first element and the second element are directly connected or combined with each other, and also includes an embodiment where one or more other intermediate elements are added to indirectly connect or bind the first element and the second element to each other.

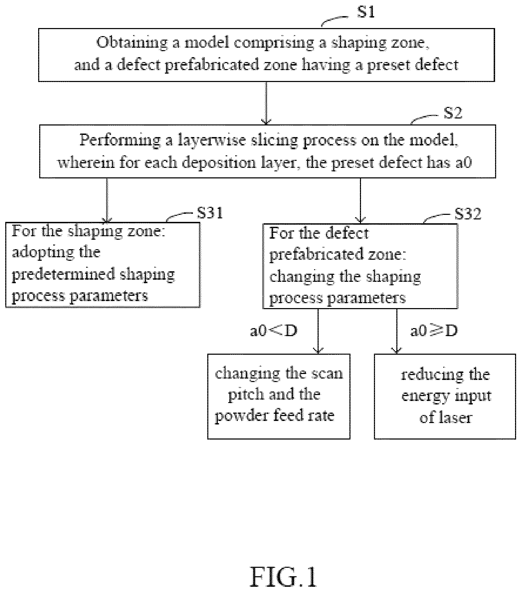

This disclosure provides a method for prefabricating a poor fusion defect by controlling the LMD process. The LMD process may adopt a synchronous powder feeding manner, as shown in the following first to third examples. Synchronous powder feeding means that the laser scanning and the metal powder feeding are carried out at the same time, and the metal powder can be fed to the position of the laser scanning in real time to form a moving metal molten pool. The method in this disclosure will be described below with reference to Figs. 1 to 10.

At step S 1, a model 10 comprising a shaping zone 1 and a defect prefabricated zone 2 is obtained.

The defect prefabricated zone 2 has a preset defect 3. For example, by means of 3D modeling software such as UG, CAD, etc., the model of an additively manufactured part for shaping or repair is divided into a shaping zone 1 and a defect prefabricated zone 2 with a preset defect 3, thereby obtaining the model 10 with the shaping zone 1 and the defect prefabricated zone 2.

In the following examples, at step S 1, the position, shape, quantity and dimension of the poor fusion defect expected to be prefabricated are preset, thereby determining the position, shape, quantity and dimension of the defect prefabricated zone 2 with the preset defect 3 in the model 10. Wherein, the dimension of the poor fusion defect expected to be prefabricated comprises the maximum dimension in the perpendicular direction SD2 described later.

At step S2, a layerwise slicing process is performed on the model 10.

For each deposition layer 4 of the defect prefabricated zone 2, the preset defect 3 has a maximum dimension a0 in the perpendicular direction SD2, wherein the perpendicular direction SD2 is perpendicular to the laser scan direction SD1 of the LMD process.

a0 may take a value within an interval range, and the interval range is a variable range of the maximum dimension of the poor fusion defect expected to be prefabricated in the perpendicular direction SD2. In other words, the aforementioned interval range has a lower limit w1 and an upper limit w2, that is, the maximum dimension of the poor fusion defect expected to be prefabricated in the perpendicular direction SD2 can vary between the lower limit w1 and the upper limit w2, and a0 may take a value between the lower limit w1 and the upper limit w2. The presetting of a0 may be completed in the modeling process at step S 1. For different deposition layers 4, a0 may be different.

The poor fusion defect is a defect with an irregular shape, which is difficult to characterize with one dimension. However, in order to prefabricate or obtain a certain poor fusion defect, the dimension of the poor fusion defect expected to be prefabricated needs to be described and measured. In this disclosure, the maximum dimension of the poor fusion defect expected to be prefabricated in the perpendicular direction SD2 is taken as a feature dimension, thereby measuring or dimensionally characterizing the poor fusion defect expected to be prefabricated. The expected feature dimension is generally an indeterminate value, or has a variable range. Therefore, by making the maximum dimension a0 of the preset defect 3 in the perpendicular direction SD2 also take a value within the aforementioned variable range or interval range accordingly, it is easy to obtain a poor fusion defect with the corresponding dimension.

For example, a0 can take the value of the lower limit w1 or the upper limit w2. Preferably, a0 is the average value of the lower limit w1 and the upper limit w2 of the aforementioned interval range, that is, a0=(w1+w2)/2.

Taking a0 being the lower limit w1 or the upper limit w2 as an example, the incremental design needs to be considered when prefabricating the poor fusion defect according to the lower limit w1 or upper limit w2, and the feature dimension of the poor fusion defect actually prefabricated should be allowed to vary within a certain range. If the lower limit w1 is taken to prefabricate the poor fusion defect, it is likely to occur that the dimension of the actually obtained poor fusion defect is small and even smaller than the aforementioned interval range. If the upper limit w2 is taken to prefabricate the poor fusion defect, it is likely to occur that the dimension of the actually obtained poor fusion defect is large and even larger than the aforementioned interval range. This actually increases the difficulty of accurately controlling the dimension of the poor fusion defect actually obtained.

Compared with a0 taking the value of the lower limit w1 or the upper limit w2, when a0 taking the average value of the lower limit w1 and the upper limit w2 (or a0=(w1+w2)/2), and characterizing the dimension of the preset defect 3, the dimension of the actually obtained poor fusion defect has space to vary up and down within the aforementioned interval range, so that the probability that the actually obtained poor fusion defect lies within the variable range expected to be obtained is greatly increased. Meanwhile, since the poor fusion defect has an irregular shape, the dimension of the actually prefabricated poor fusion defect has more varying space, which can increase the qualified rate in the defect dimension, improve the prefabrication success rate of the LMD shaping piece with poor fusion defects, and increase the detection rate of non-destructive testing of defects. Next, the setting of shaping process parameters, such as a path planning process, may be performed on the model 10.

At step S31, for the shaping zone 1, a shaping process is performed under predetermined shaping process parameters of the LMD process.

The "predetermined shaping process parameters" may be conventional, normal or standard shaping process parameters (comprising laser power, scan pitch, powder feed rate, shaping path, etc.), so that the shaping zone 1 is metallurgically bonded densely, and the defects such as poor fusion defects are minimized as much as possible. The "predetermined..." mentioned herein (such as predetermined laser power, predetermined scan pitch, predetermined powder feed rate, predetermined shaping path, etc.) refers to the predetermined shaping process parameter adopted for the shaping zone 1.

At step S32, for the defect prefabricated zone, the shaping process parameters are controlled as follows: when a0<D, with respect to the shaping zone 1, the scan pitch between shaping paths (comprising the (k-1)*th* shaping path 51 , the *kth* shaping path 50, the (k+1)*th* shaping path 61, etc., described later) and the powder feed rate are changed in the deposition layer 4, thereby prefabricating the poor fusion defect; when a0≥D, with respect to the shaping zone 1, energy input of laser is reduced in the deposition layer 4, thereby prefabricating the poor fusion defect. Wherein D is the spot diameter of the laser in the deposition layer 4 of the defect prefabricated zone 2.

As described above, a0 is the maximum dimension of the preset defect 3 in the perpendicular direction SD2, which is a characterization of the dimension of the preset defect 3. a0 is set according to the variable range of the maximum dimension of the poor fusion defect expected to be prefabricated in the perpendicular direction SD2. Therefore, a0 is also a characterization of the dimension of the poor fusion defect expected to be prefabricated. Generally, the spot diameter D is the width of the single-pass molten pool in the laser scan path. It should be appreciated that, D may be different for different deposition layers.

The process of reducing the energy input of the laser is carried out with the single-pass molten pool width in the laser scan path as a unit. In other words, at least the energy input in a single-pass molten pool width is reduced. That is, the minimum dimension of the poor fusion defect, which can be prefabricated by reducing the energy input of the laser, is the single-pass weld pool width. Therefore, when a0<D, it is practically impossible to prefabricate a poor fusion defect with an expected dimension by reducing the energy input of the laser.

Moreover, when the poor fusion defect is prefabricated by changing the scan pitch between the shaping paths and the powder feed rate, a void would be formed in the zone where the preset defect 3 is located, since the LMD shaping would avoid the zone where the preset defect 3 is located. a0<D means that only a void smaller than the single-pass molten pool width needs to be reserved in the deposition layer 4. a0≥D means that, the width of the void reserved in the deposition layer 4 is larger than the single-pass molten pool width. When the void width is too large, the top of the defect prefabricated zone 3 cannot be enclosed by the lap-joint of the two-pass molten pools in the shaping zone 1, or the accumulation cannot occur in the shaping zone 1. According to the analysis, when the void width in the defect prefabricated zone 2 is smaller than the single-pass molten pool width, the top of the defect prefabricated zone 2 can be enclosed by the lap-joint of the two-pass molten pools. On the contrary, when the void width in the defect prefabricated zone 2 is larger than or equal to the single-pass molten pool width, it cannot be completely ensured that the enclosure of the top of the defect prefabricated zone 2 can be achieved by the lap-joint of the two-pass molten pools, especially when the void width is much larger than the single-pass molten pool width. For example, when a0=3D, the void width reaches the width of lapjoint of multi-pass molten pool, and when the void is below the shaping zone 1, it means that there is no zone under the shaping zone 1 that supports the enclosure of two-or-more-pass molten pools. At this time, if the low-power sintering manner is adopted (that is, the energy input of the laser is reduced), the enclosure of two-or-more-pass molten pools at the top of the defect prefabricated zone 2 can be supported, thereby achieving the prefabrication of poor fusion defects.

Therefore, in this disclosure, when it is determined that a0<D, the dimension of the preset defect 3 or the poor fusion defect expected to be prefabricated is relatively small, and the poor fusion defect can be prefabricated by changing the scan pitch between the shaping paths and the powder feed rate; when it is determined that a0≥D, the dimension of the preset defect 3 or the poor fusion defect expected to be prefabricated is relatively large, and the poor fusion defect can be prefabricated by reducing the energy input of the laser. By comparing a0 with D, the relative size of the poor fusion defect expected to be prefabricated can be determined, and different control schemes are adopted for defect prefabrication according to the different sizes of the defects, which can more easily obtain the poor fusion defect expected to be prefabricated and improve the prefabrication success rate of the poor fusion defect.

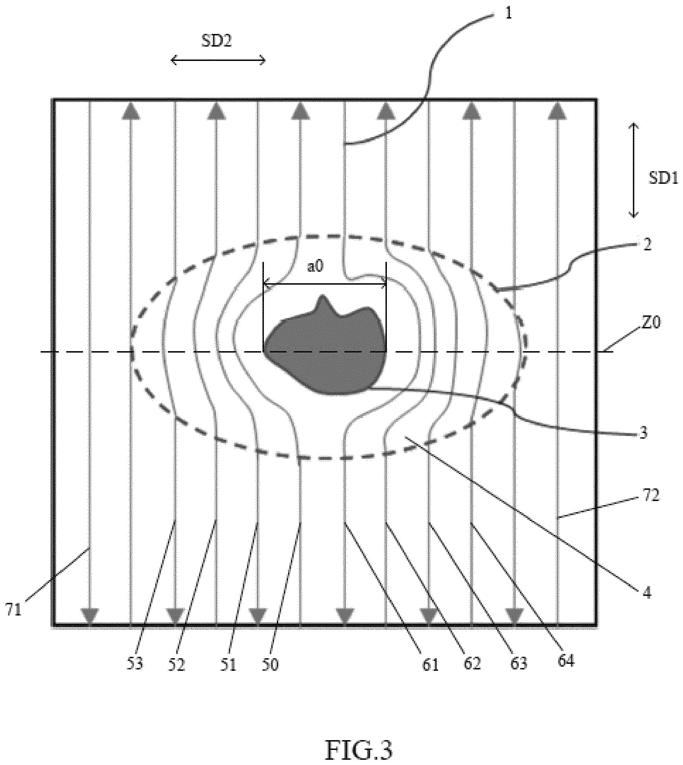

For the case of a0<D, the defect prefabricated zone 2 may comprise a kth shaping path 50 and a (k+1)th shaping path 61 that are adjacent to each other in the deposition layer. The preset defect 3 is located between the kth shaping path 50 and the (k+1)th shaping path 61. The shaping paths on the first side of the preset defect 3 in the perpendicular direction SD2 are the kth shaping path 50, the (k-1)th shaping path 51, the (k-2)th shaping path 52, until the first shaping path 71 in sequent. The shaping paths on the second side of the preset defect 3 in the perpendicular direction SD2 are the (k+1)th shaping path 61, the (k+2)th shaping path 62, until the last shaping path 72 in sequent. Wherein, k can be any natural number greater than 2. For example, in the embodiment shown in Fig. 3, k>3. Further, k=6. Fig. 3 shows the kth shaping path 50, the (k-1)th shaping path 51, the (k-2)th shaping path 52 and the (k-3)th shaping path 53 located sequentially on the left of the preset defect 3, as well as the (k+1)th shaping path 61, the (k+2)th shaping path 62, the (k+3)th shaping path 63 and the (k+4)th shaping path 64 on the right of the preset defect 3. Generally, the numbers of the shaping paths increase sequentially from left to right.

For the defect prefabricated zone 2, the shaping process parameters are controlled as follows: h(k)=a0+D; h(k-1) and h(k+1) may be preset to 20%-80% of D, and under the condition that the layer thickness t0 of deposition layer 4 of the defect prefabricated zone 2 is kept unchanged, f(k) and f(k+1) are respectively set according to h(k-1) and h(k+1). Wherein, h(k-1) is the scan pitch formed at the predetermined position Z0 in the deposition layer 4 between the (k-1)th shaping path 51 and the kth shaping path 50, h(k) is the scan pitch formed at the predetermined position Z0 in the deposition layer 4 between the kth shaping path 50 and the (k+1)th shaping path 61, h(k+1) is the scan pitch formed at the predetermined position Z0 in the deposition layer 4 between the (k+1)th shaping path 61 and the (k+2)th shaping path 62, and so on. Wherein, the predetermined position Z0 corresponds to the maximum dimension of the preset defect 3 in the deposition layer 4. f(k) is the powder feed rate corresponding to the kth shaping path 50, f(k+1) is the powder feed rate corresponding to the (k+1)th shaping path 61, and so on. Generally, the larger h(k-1) and h(k+1) are set, the larger f(k) and f(k+1) are respectively set. The layer thickness t0 is the deposition height of the deposition layer 4. In the case that 20%*D≤h(k-1)≤80%*D and 20%*D≤h(k+1)≤80%*D, the corresponding lap-joint rate can be guaranteed to be 20%-80%.

Further, the (k-1)th shaping path 51 and the (k+2)th shaping path 62 may be located in the deposition layer 4 of the defect prefabricated zone 2.

For the defect prefabricated zone 2, the shaping process parameters are further controlled, so that: h(k-2)=a*h(k-1); h(k+2)=b*h(k+1); f(k-1)=c*f(k); f(k+2)=d*f(k+1); wherein a, b, c and d are constants greater than 1. Deduced from the above description, h(k-2) is the scan pitch formed at the predetermined position Z0 in the deposition layer 4 between the (k-2)th shaping path 52 and the (k-1)th shaping path 51, and h(k+2) is the scan pitch formed at the predetermined position Z0 in the deposition layer 4 between the (k+2)th shaping path 62 and the (k+3)th shaping path 63. f(k-1) is the powder feed rate corresponding to the (k-1)th shaping path 51, and f(k+2) is the powder feed rate corresponding to the (k+2)th shaping path 62. It should be appreciated that the defect prefabricated zone 2 may comprise more shaping paths in the deposition layer 4. For example, deduced from the above description, h(k-3)=a'*h(k-2), h(k+3)=b'*h(k+2), f(k-2)=c'*f(k-1), f(k+3)=d'*f(k+2)..., where a', b', c', d'... are all constants greater than 1. In general, in the deposition layer 4 of the defect prefabricated zone 2, the scan pitches gradually increase from the kth shaping path 50 to the left, and the scan pitches also gradually increase from the (k+1)th shaping path 61 to the right. Alternatively, in the deposition layer 4 of the defect prefabricated zone 2, the scan pitch between the shaping paths tends to decrease as getting closer to the position of the preset defect 3; and the powder feed rate at the shaping path correspondingly tends to decrease as getting closer to the position of the preset defect 3.

For the case of a0<D, the shaping process parameters may be controlled as follows: for the defect prefabricated zone 2, t0=100-200μm, P0=600-1000W,

D=0.8-1mm, wherein t0 is the layer thickness, and P0 is the laser power.

For the case of a0≥D, the energy input of the laser in the deposition layer 4 is reduced. In other words, P2=m*P1 is set, wherein P2 is the laser power corresponding to the defect prefabricated zone 2, P1 is the predetermined laser power among the predetermined shaping process parameters corresponding to the shaping zone 1, and m is a constant less than 1. P2≤0.1*P1 may be set.

It should be appreciated that as described herein, a certain shaping process parameter "=" a specific value does not require strict equality in the mathematical sense, but means "≈", such as allowing a margin of ±10%.

Specific examples of this disclosure are provided below, wherein the first example and the second example are directed to the case where the dimension of the poor fusion defect in the LMD shaping piece is relatively small (a0<D), while the third example is directed to the case where the dimension of the poor fusion defect in the LMD shaping piece is relatively large (a0≥D). It should be appreciated that the latter example may use the element numbers and part of the contents in the previous example, wherein the same numbers are used to represent the same or similar features, and the description of the same technical contents is selectively omitted. Regarding the description of the omitted part, reference may be made to the previous example, and the description of the latter example would not be repeated. In addition, it should also be appreciated that the LMD shaping piece may be a LMD manufacturing piece manufactured by utilizing the LMD process, and may also be a LMD repairing piece repaired and shaped by utilizing the LMD process.

First Example

(1) The position, shape, quantity and dimension of the poor fusion defect expected to be prefabricated in the LMD shaping piece are preset.

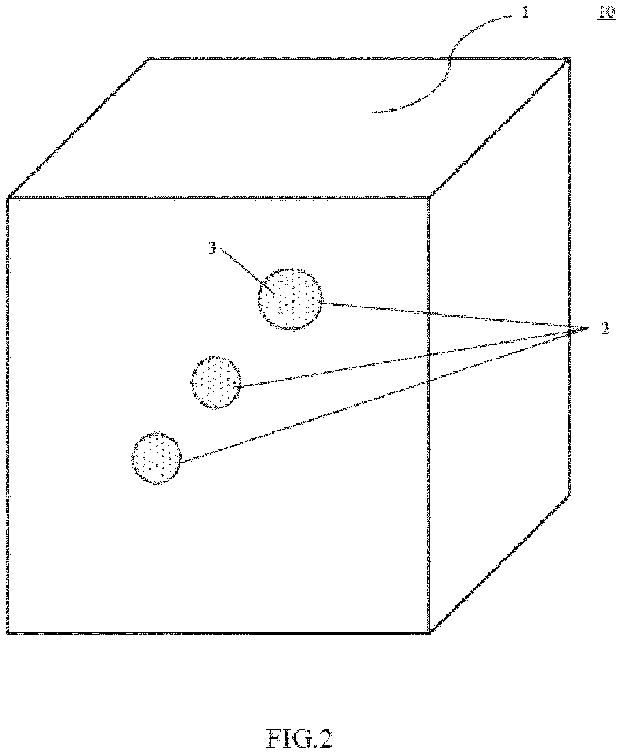

As shown in Fig. 2, one preset defect 3 is set on three different deposition layers respectively to simulate the poor fusion defect expected to be prefabricated. The poor fusion defect expected to be prefabricated is approximately an irregular hole. For a certain deposition layer 4, the maximum dimension of the poor fusion defect expected to be prefabricated is about 0.65mm~1mm in the perpendicular direction SD2. That is, w1=0.65mm, and w2=1mm. a0=(w1+w2)/2=0.825mm is set.

(2) By dividing the model 10 of the LMD shaping piece into three defect prefabricated zones 2 and a shaping zone 1 according to the position, shape, quantity and dimension of the poor fusion defect expected to be prefabricated, a model 10 comprising the shaping zone 1 and the defect prefabricated zone 2 is obtained.

A layerwise slicing process and a path planning process is performed on the model 10. A shaping process is performed on the shaping zone 1 under predetermined shaping process parameters of the LMD process. A normal lap-joint ratio is adopted on the boundary of the defect prefabricated zone 2 and the boundary of the shaping zone 1, and a dense metallurgical bonding is presented.

(3) For the defect prefabricated zone 2, the path planning shown in Fig. 3 is performed in the deposition layer 4 of the defect prefabricated zone 2, according to the shape and dimension of the preset defect 3.

Fig. 3 shows the laser scan direction SD1, and the perpendicular direction SD2 that is perpendicular to the laser scanning direction SD1 in the deposition layer 4. For the shaping zone 1, the laser scan direction SD1 is the extending direction of each shaping path. For the defect prefabricated zone 2, the laser scan direction SD1 is the direction from the start point to the end point of each shaping path. For one deposition layer 4, the laser scan direction SD1 is determined.

The scan pitch and the powder feed rate of the defect prefabricated zone 2 are controlled, and the LMD process with synchronous powder feeding is adopted to perform depositing layer by layer, thereby prefabricating the poor fusion defect. Wherein, the above shaping process parameters are recycled for the next deposition layer 4, after completing the prefabrication of the poor fusion defect in the current deposition layer 4, until the prefabrication of the poor fusion defect is finally completed, wherein the shaping process parameters between layers (e.g. shaping path, powder feed rate, etc.) can be adjusted appropriately.

The shaping process parameters are controlled, so that:

$$h(k)=a0+D;$$

$$h(k-2)=1.2*h(k-1);$$

$$h(k+2)=1.17*h(k+1);$$

$$f(k-1)=1.12*f(k);$$

$$f(k+2)=1.19*f(k+1);$$

wherein for the defect prefabricated zone 2, D=1mm, h(k-1)=0.2mm, h(k+1)=0.22mm, f(k)=6g/min, f(k+1)=5g/min, t0=200μm, and P0=1000W. For the entire defect prefabricated zone 2, the scan pitches are controlled to be less than or equal to 0.5 mm, and the powder feed rates are controlled to be less than or equal to 12 g/min.

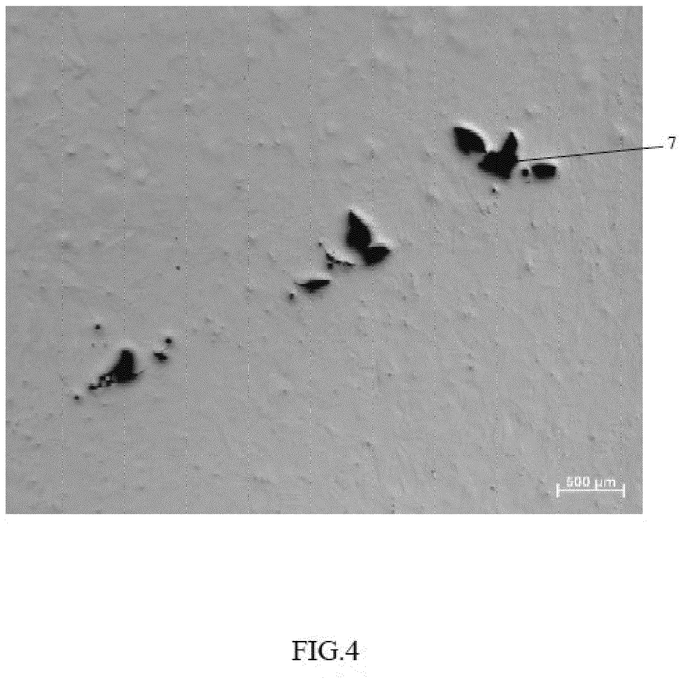

After detected, the appearance of the actually obtained poor fusion defect 7 at the polished state is shown in Fig. 4. The maximum dimension of the poor fusion defect 7 in the perpendicular direction SD2 is about 0.68mm~0.85mm, which is in line with expectations.

Second Example

(1) The position, shape, quantity and dimension of the poor fusion defect expected to be prefabricated in the LMD shaping piece are preset.

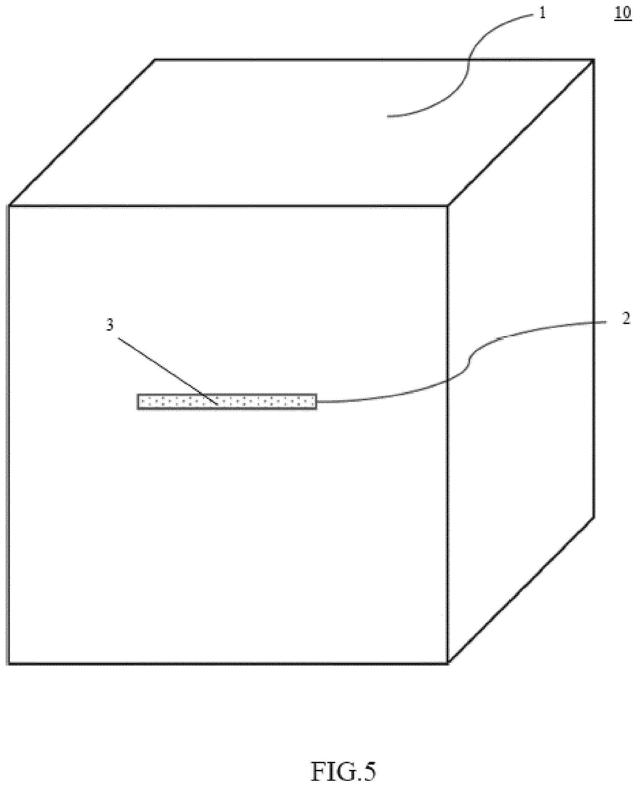

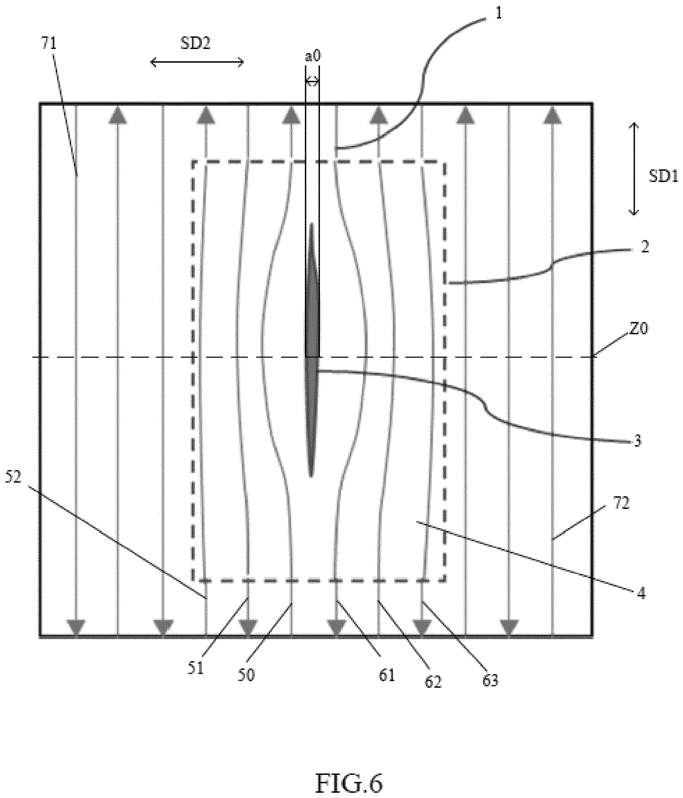

As shown in Fig. 5 and Fig. 6, one preset defect 3 is set in the deposition layer to simulate the poor fusion defect expected to be prefabricated. The poor fusion defect expected to be prefabricated is approximately an irregular line with a small dimension. For a certain deposition layer 4, the maximum dimension of the poor fusion defect expected to be prefabricated is about $20\mu m\text{~}40\mu m$ in the perpendicular direction SD2. That is, w1=$20\mu m$, and w2=$40\mu m$. a0=(w1+w2)/2=$30\mu m$ is set. The poor fusion defect expected to be prefabricated also has a lengthwise dimension along the laser scan direction SD1, which can be preset to about 100 $\mu m\text{~}120\ \mu m$.

(2) By dividing the model 10 of the LMD shaping piece into three defect prefabricated zones 2 and a shaping zone 1 according to the position, shape and dimension of the poor fusion defect expected to be prefabricated, a model 10 comprising the shaping zone 1 and the defect prefabricated zone 2 is obtained.

A layerwise slicing process and a path planning process is performed on the model 10. A shaping process is performed on the shaping zone 1 under predetermined shaping process parameters of the LMD process. A normal lap-joint ratio is adopted on the boundary of the defect prefabricated zone 2 and the boundary of the shaping zone 1, and a dense metallurgical bonding is presented.

(3) For the defect prefabricated zone 2, the path planning shown in Fig. 3 is performed in the deposition layer 4 of the defect prefabricated zone 2, according to the shape and dimension of the preset defect 6.

The scan pitch and the powder feed rate of the defect prefabricated zone 2 are controlled, and the LMD process with synchronous powder feeding is adopted to perform depositing layer by layer, thereby prefabricating the poor fusion defect.

The shaping process parameters are controlled, so that:

$$h(k)=a0+D;$$

$$h(k\text{-}2)=1.07*h(k\text{-}1);$$

$$h(k\text{+}2)=1.07*h(k\text{+}1);$$

$$f(k\text{-}1)=1.16*f(k);$$

$$f(k\text{+}2)=1.16*f(k\text{+}1);$$

wherein for the defect prefabricated zone 2, D=0.8mm, h(k-1)=0.32mm, h(k+1)=0.32mm, f(k)=5g/min, f(k+1)=5g/min, t0=$100\mu m$, and P0=600W. For the entire defect prefabricated zone 2, the scan pitches are controlled to be less than or equal to 0.4mm, and the powder feed rates are controlled to be less than or equal to 8g/min.

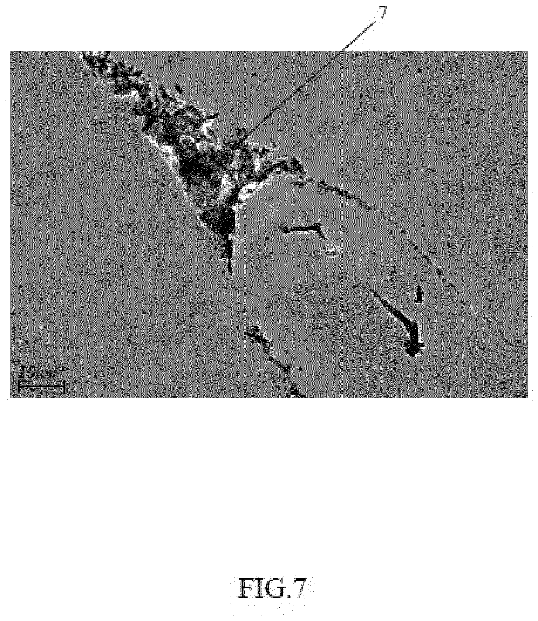

After detected, the appearance of the actually obtained poor fusion defect 7 at the polished state is shown in Fig. 7. The maximum dimension of the poor fusion defect 7 in the perpendicular direction SD2 is about $25\mu m$, which is in line with expectations. In addition, the lengthwise dimension of the poor fusion defect 7 is about $105\mu m$, which is also in line with expectations.

Third Example

(1) The position, shape, quantity and dimension of the poor fusion defect expected to be prefabricated in the LMD shaping piece are preset.

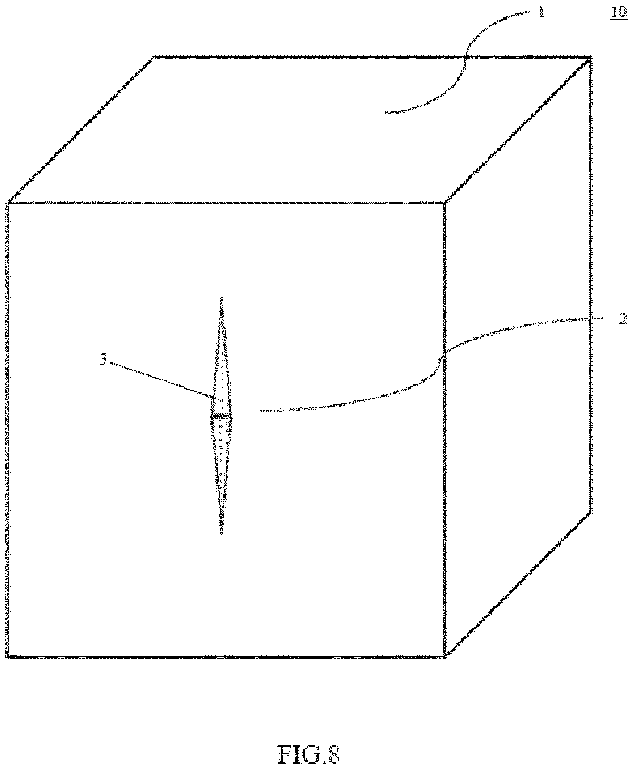

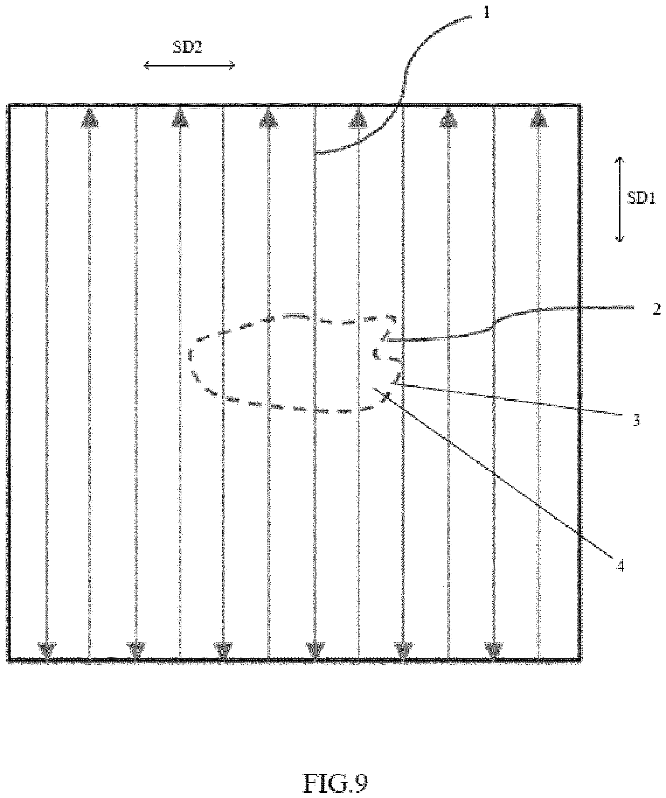

As shown in Fig. 8 and Fig. 9, one preset defect 3 is set in the deposition layer, to simulate the poor fusion defect expected to be prefabricated. The poor fusion defect expected to be prefabricated is approximately an irregular long bar with a large dimension. For a certain deposition layer 4, the maximum dimension of the poor fusion defect expected to be prefabricated is about 6mm~7mm in the perpendicular direction SD2. That is, w1=6mm, and w2=7mm. a0=(w1+w2)/2=6.5mm is set. The poor fusion defect expected to be prefabricated also has a height dimension along the height direction of the laser shaping, which can be preset to about 0.8 mm to 1 mm.

(2) By dividing the model 10 of the LMD shaping piece into three defect prefabricated zones 2 and a shaping zone 1 according to the position, shape and dimension of the poor fusion defect expected to be prefabricated, a model 10 comprising the shaping zone 1 and the defect prefabricated zone 2 is obtained.

A layerwise slicing process and a path planning process is performed on the model 10. A shaping process is performed on the shaping zone 1 under predetermined shaping process parameters of the LMD process. A normal lap-joint ratio is adopted on the boundary of the defect prefabricated zone 2 and the boundary of the shaping zone 1, and a dense metallurgical bonding is presented.

(3) For the defect prefabricated zone 2, by reducing the energy input of the laser in the deposition layer 4, the poor fusion defect is thereby prefabricated.

The LMD process with synchronous powder feeding is adopted to perform depositing layer by layer. The energy input of the laser in the defect prefabricated zone 2 is low, so that the powder synchronously fed in the defect prefabricated zone 2 cannot be sufficiently melted and deposited, and the powder at the pre-sintered state is filled into the defect prefabricated zone 2 to form the loose pre-sintered powder of the deposition layer 4 which supports the shaping of the next deposition layer.

The shaping process parameters are controlled, so that:

$$P2=0.1*P1,$$

wherein P1=2800W, t0=1mm, v0=1000mm/min, h0=0.25mm, D=5mm, v0 is the scan rate for the entire defect prefabricated zone 2, and h0 is the scan pitch for the entire defect prefabricated zone 2.

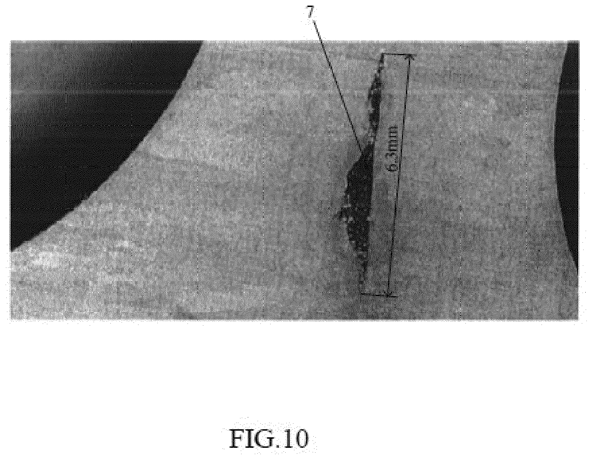

After detected, the appearance of the actually obtained poor fusion defect 7 at the polished state is shown in Fig. 10. The maximum dimension of the poor fusion defect 10 in the perpendicular direction SD2 is about 6.3mm, which is in line with expectations. In addition, the height dimension of the poor fusion defect 7 is about 0.93mm, which is also in line with expectations.

By controlling the LMD process, the above method divides the model of the LMD shaping piece into a defect prefabricated zone and a shaping zone according to the size, position, shape or quantity of the poor fusion defect expected to be prefabricated. By changing the shaping process parameters of the defect prefabricated zone, the prefabrication of the poor fusion defect is completed, while the shaping process parameters are adopted for the shaping zone to present a dense metallurgical bonding. This method combines the characteristics of the AM process and the process from point to line, from line to surface and from 2D to 3D.

In addition, the above method can control the position of the poor fusion defect, and actually simulate the poor fusion defect produced in the normal AM solidification process without damaging the structure and properties of the AM part.

Moreover, the above method provides the basis for determining the dimension of the poor fusion defect. When a0<D, by controlling the scan pitch between the shaping paths in the deposition layer of the defect prefabricated zone and the powder feed rate of the corresponding shaping path, the lap-joint ratio at the prefabricated position of the poor fusion defect in the defect prefabricated zone is controlled. When a0≥D, by reducing the energy input of the laser in the deposition layer of the defect prefabricated zone, the powder synchronously fed at the prefabricated position of the poor fusion defect cannot be sufficiently melted and deposited, and the powder at the pre-sintered state is filled into the prefabricated position to form the loose pre-sintered powder of the deposition layer which supports the shaping of the next layer.

The above method can simulate the producing process of poor fusion defects in the actual LMD process, and prefabricate AM standard samples with poor fusion defect, so as to accurately analyze the relationship between AM part defects and non-destructive testing signals, which not only helps optimize the non-destructive testing process to obtain a higher accuracy in defect detection, but also obtains a better non-destructive testing results in the meantime. In addition, by prefabricating a poor fusion defect in the typical structure or key positions of AM performance samples or parts, it can effectively analyze and evaluate the relationship between the AM poor fusion defects and the structure and properties, further analyze and evaluate the relationship between the poor fusion defect and the AM part reliability, and estimate the service life of parts, providing a strong theoretical support for the application of AM parts, which have broad research and application prospects.

Although this disclosure is disclosed above with preferred examples, it is not intended to limit this disclosure. Any skilled in the art can make variations and modifications without departing from the spirit and scope of this disclosure. For example, the variations in different embodiments can be appropriately combined. Therefore, any modifications, equivalent variations and embellishments made to the above examples according to the technical essence of this disclosure without departing from the content of the technical solutions of this disclosure all fall within the protection scope defined by the claims of this disclosure.

**Claims**

1. A method for prefabricating a poor fusion defect by controlling a LMD process, **characterized in that** the method comprises:

   obtaining a model, comprising a shaping zone and a defect prefabricated zone that has a preset defect;
   performing a layerwise slicing process on the model, wherein for each deposition layer of the defect prefabricated zone, the preset defect has a maximum dimension a0 in a perpendicular direction, which is perpendicular to a laser scan direction of the LMD process, wherein a0 takes a value within an interval range, the interval range is a variable range of a feature dimension of the poor fusion defect expected to be prefabricated, and the feature dimension is a maximum dimension of the poor fusion defect in the perpendicular direction;
   for the shaping zone, performing a shaping process under predetermined shaping process parameters of the LMD process; and
   for the defect prefabricated zone, controlling shaping process parameters as follows:

for each deposition layer, when a0<D, with respect to the shaping zone, changing a scan pitch between shaping paths and a powder feed rate in the deposition layer, thereby prefabricating the poor fusion defect; and
for each deposition layer, when a0≥D, with respect to the shaping zone, reducing energy input of laser in the deposition layer, thereby prefabricating the poor fusion defect;
wherein D is a spot diameter of the laser in the deposition layer of the defect prefabricated zone.

2. The method according to claim 1, **characterized in that**

$$a0=(w1+w2)/2 \text{ is set;}$$

wherein w1 and w2 are lower limit and upper limit of the interval range, respectively.

3. The method according to claim 1, **characterized in that**
position, shape, quantity and dimension of the poor fusion defect expected to be prefabricated are preset, thereby determining position, shape, quantity and dimension of the defect prefabricated zone with the preset defect in the model, wherein the dimension of the poor fusion defect expected to be prefabricated comprises the feature dimension.

4. The method according to claim 1, **characterized in that**

when a0<D, the defect prefabricated zone comprises a k*th* shaping path and a (k+1)*th* shaping path that are adjacent to each other in the deposition layer, the preset defect is located between the k*th* shaping path and the (k+1)*th* shaping path, shaping paths on a first side of the preset defect in the perpendicular direction are the k*th* shaping path, a (k-1)*th* shaping path, a (k-2)*th* shaping path, until a first shaping path in sequent, and shaping paths on a second side of the preset defect in the perpendicular direction are the (k+1)*th* shaping path, a (k+2)*th* shaping path, until a last shaping path in sequent, wherein k is any natural number greater than 2; and
for the defect prefabricated zone, the shaping process parameters are controlled as follows:

$$h(k)=a0+D;$$

h(k-1) and h(k+1) are preset to 20%-80% of D, and under a condition that a layer thickness of the deposition layer of the defect prefabricated zone is kept unchanged, f(k) and f(k+1) are respectively set according to h(k-1) and h(k+1);
wherein h(k-1) is a scan pitch formed at a predetermined position in the deposition layer between the (k-1)*th* shaping path and the k*th* shaping path, h(k) is a scan pitch formed at the predetermined position in the deposition layer between the k*th* shaping path and the (k+1)*th* shaping path, h(k+1) is a scan pitch formed at the predetermined position in the deposition layer between the (k+1)*th* shaping path and the (k+2)*th* shaping path, the predetermined position corresponds to the maximum dimension of the preset defect in the deposition layer, f(k) is the powder feed rate corresponding to the k*th* shaping path, and f(k+1) is the powder feed rate corresponding to the (k+1)*th* shaping path.

5. The method according to claim 4, **characterized in that** the (k-1)*th* shaping path and the (k+2)*th* shaping path are located in the deposition layer of the defect prefabricated zone;
for the defect prefabricated zone, the shaping process parameters are further controlled as follows:

$$h(k-2)=a*h(k-1);$$

$$h(k+2)=b*h(k+1);$$

$$f(k-1)=c*f(k);$$

$$f(k+2)=d*f(k+1);$$

wherein a, b, c, and d are constants greater than 1, h(k-2) is a scan pitch formed at a predetermined position in the deposition layer between the (k-2)*th* shaping path and the (k-1)*th* shaping path, h(k+2) is a scan pitch formed at the predetermined position in the deposition layer between the (k+2)*th* shaping path and a (k+3)*th* shaping path, f(k-1) is the powder feed rate corresponding to the (k-1)*th* shaping path, and f(k+2) is the powder feed rate corresponding to the (k+2)*th* shaping path.

6. The method according to claim 5, **characterized in that**
the shaping process parameters are controlled as follows:

for the defect prefabricated zone, $t0=100\text{-}200\mu m$, $P0=600\text{-}1000W$, $D=0.8\text{-}1mm$; wherein t0 is the layer thickness, and P0 is a laser power.

7. The method according to claim 1, **characterized in that**

    when $a0 \geq D$, $P2 \leq 0.1*P1$ is set; wherein P2 is a laser power corresponding to the defect prefabricated zone, and P1 is a predetermined laser power among the predetermined shaping process parameters corresponding to the shaping zone.

8. The method according to claim 1, **characterized in that** the LMD process adopts a synchronous powder feeding manner.

```
                                                    ┌─ S1
┌──────────────────────────────────────────────────────────┐
│         Obtaining a model comprising a shaping zone,       │
│    and a defect prefabricated zone having a preset defect  │
└──────────────────────────────────────────────────────────┘
                              │
                              │              ┌─ S2
                              ▼
┌──────────────────────────────────────────────────────────┐
│        Performing a layerwise slicing process on the model,│
│    wherein for each deposition layer, the preset defect has a0│
└──────────────────────────────────────────────────────────┘
             │                                 │
             │    ┌─ S31                        │    ┌─ S32
             ▼                                 ▼
┌────────────────────────┐          ┌────────────────────────┐
│ For the shaping zone:  │          │ For the defect         │
│ adopting the           │          │ prefabricated zone:    │
│ predetermined shaping  │          │ changing the shaping   │
│ process parameters     │          │ process parameters     │
└────────────────────────┘          └────────────────────────┘
                                        │                │
                                   a0<D │           a0≥D │
                                        ▼                ▼
                              ┌──────────────┐  ┌──────────────┐
                              │changing the scan│ │ reducing the │
                              │  pitch and the  │ │ energy input │
                              │ powder feed rate│ │   of laser   │
                              └──────────────┘  └──────────────┘
```

FIG.1

FIG.2

FIG.3

FIG.4

FIG.5

FIG.6

FIG.7

FIG.8

FIG.9

FIG.10

## INTERNATIONAL SEARCH REPORT

| International application No. |
|---|
| **PCT/CN2020/137883** |

**A. CLASSIFICATION OF SUBJECT MATTER**

B33Y 10/00(2015.01)i; B33Y 50/02(2015.01)i; B22F 3/105(2006.01)i

According to International Patent Classification (IPC) or to both national classification and IPC

**B. FIELDS SEARCHED**

Minimum documentation searched (classification system followed by classification symbols)

B33Y B22F B29C

Documentation searched other than minimum documentation to the extent that such documents are included in the fields searched

Electronic data base consulted during the international search (name of data base and, where practicable, search terms used)

CNPAT, CNKI, WPI, EPODOC: 中国航发, 付俊, 雷力明, LMD, 激光, 熔化, 熔融, 熔覆, 沉积, 增材, 3d打印, 缺陷, 熔合, 融合, 不良, 缺陷, 预制, 预置, 扫描, 间距, 能量, laser w melting w deposition, laser w metal w deposition, 3d, three w dimensional w print+, additive w manufact+, flaw?, +defect?, poor, fusion, preset, perform+, scan+, power

**C. DOCUMENTS CONSIDERED TO BE RELEVANT**

| Category* | Citation of document, with indication, where appropriate, of the relevant passages | Relevant to claim No. |
|---|---|---|
| PX | CN 111203537 A (AECC SHANGHAI COMMERCIAL AIRCRAFT ENGINE MANUFACTURING CO., LTD. et al.) 29 May 2020 (2020-05-29) claims 1-8, figures 1-10 | 1-8 |
| A | CN 108436081 A (WUXI CITY PRODUCT QUALITY SUPERVISION AND INSPECTION INSTITUTE) 24 August 2018 (2018-08-24) description, paragraphs 5-16, figure 1 | 1-8 |
| A | US 10252509 B2 (UNITED TECHNOLOGIES CORPORATION) 09 April 2019 (2019-04-09) entire document | 1-8 |
| A | WO 2017180116 A1 (GKN AEROSPACE NORTH AMERICA INC.) 19 October 2017 (2017-10-19) entire document | 1-8 |
| A | CN 108817386 A (NORTHWESTERN POLYTECHNICAL UNIVERSITY) 16 November 2018 (2018-11-16) entire document | 1-8 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 March 2021** | **22 March 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/137883**

**C.    DOCUMENTS CONSIDERED TO BE RELEVANT**

| Category* | Citation of document, with indication, where appropriate, of the relevant passages | Relevant to claim No. |
|---|---|---|
| A | CN 108038325 A (BEIJING UNIVERSITY OF TECHNOLOGY) 15 May 2018 (2018-05-15) entire document | 1-8 |
| A | CN 108982181 A (SOUTHWEST JIAOTONG UNIVERSITY) 11 December 2018 (2018-12-11) entire document | 1-8 |

Form PCT/ISA/210 (second sheet) (January 2015)

INTERNATIONAL SEARCH REPORT
Information on patent family members

International application No.

**PCT/CN2020/137883**

| Patent document cited in search report | | | Publication date (day/month/year) | Patent family member(s) | | | Publication date (day/month/year) |
|---|---|---|---|---|---|---|---|
| CN | 111203537 | A | 29 May 2020 | CN | 111203537 | B | 28 July 2020 |
| CN | 108436081 | A | 24 August 2018 | None | | | |
| US | 10252509 | B2 | 09 April 2019 | EP | 3232353 | A1 | 18 October 2017 |
| | | | | US | 2017291367 | A1 | 12 October 2017 |
| WO | 2017180116 | A1 | 19 October 2017 | None | | | |
| CN | 108817386 | A | 16 November 2018 | CN | 108817386 | B | 14 February 2020 |
| CN | 108038325 | A | 15 May 2018 | None | | | |
| CN | 108982181 | A | 11 December 2018 | CN | 108982181 | B | 20 March 2020 |

Form PCT/ISA/210 (patent family annex) (January 2015)